# FASCICULE DE BREVET EUROPEEN

(11) **EP 1 123 827 B1**
(45) Date de publication et mention de la délivrance du brevet: **02.11.2006**
(21) Numéro de dépôt: 01400298.4
(22) Date de dépôt: 07.02.2001
(51) Int. Cl.: B60J 10/00, B60J 10/08

(54) **Joint d'étanchéité à effet insonorisant pour ouvrant de véhicule automobile, à aptitude à la déformation améliorée**
Schalldämmendes Dichtungsprofil für Kraftfahrzeugöffnung mit verbesserten Verformungseigenschaften
Sound damping sealing strip for an opening of an automotive vehicle, with improved deformation ability

(30) Priorité: 10.02.2000 FR 0001655
(43) Date de publication de la demande: 16.08.2001
(73) Titulaire: Metzeler Automotive Profile Systems Transieres, 92000 Nanterre (FR)
(72) Inventeur: Dron, Bernard, 92800 Puteaux (FR)
(74) Mandataire: Jolly, Jean-Pierre

(56) Documents cités:
- EP-A- 0 613 800
- EP-A- 0 622 261
- EP-A- 0 687 586
- EP-A- 0 873 897
- EP-A- 0 955 198
- DE-C- 19 720 713
- FR-A- 2 793 196
- PATENT ABSTRACTS OF JAPAN vol. 011, no. 086 (M-572), 17 mars 1987 (1987-03-17) -& JP 61 241228 A (TOYODA GOSEI CO LTD), 27 octobre 1986 (1986-10-27)

## Description

La présente invention concerne un joint d'étanchéité à effet insonorisant, pour ouvrant de véhicule automobile, tel que coffre, hayon, custode, porte ou autre, présentant une aptitude à la déformation améliorée.

De tels joints pour ouvrants comprennent généralement :
- un profilé formant pince à section en U, en élastomère ou en plastomère, comportant habituellement une armature rigide et destiné à coiffer et pincer une partie de l'encadrement de l'ouverture de la carrosserie de l'automobile associée à cet ouvrant, ou un moyen similaire de fixation sur cet encadrement ;
- et au moins un organe d'étanchéité, notamment un profilé tubulaire en un matériau déformable élastiquement, généralement un matériau cellulaire, attenant par exemple à une branche latérale ou à la base du profilé à section en U et faisant saillie vers l'extérieur à partir de l'encadrement de l'ouverture associée à l'ouvrant, en vue d'être comprimé entre ce dernier et l'encadrement, en position de fermeture de l'ouvrant, pour assurer l'étanchéité du véhicule.

L'organe d'étanchéité peut aussi être constitué d'une lèvre attenante au profilé à section en U et faisant saillie vers l'extérieur de celui-ci.

Le profilé à section en U et l'organe d'étanchéité sont habituellement en des matériaux thermoplastiques ou élastomériques et sont réalisés par coextrusion.

Outre son rôle d'organe d'étanchéité, lorsqu'il est comprimé par l'ouvrant, en position de fermeture de celui-ci, l'organe d'étanchéité a aussi une fonction d'insonorisation de l'habitacle du véhicule et il a donc été proposé, dans le passé, d'y apporter divers perfectionnements, en particulier lorsqu'il s'agit d'un profilé tubulaire, en vue d'améliorer ses propriétés insonorisantes.

Il a ainsi été suggéré d'utiliser, au lieu d'un unique profilé tubulaire percé d'orifices permettant le passage de l'air vers l'intérieur ou l'extérieur du profilé, deux profilés tubulaires de ce type attenants l'un à l'autre, mais ceci complique notablement les opérations de fabrication, en raison notamment de la nécessité de pratiquer deux perçages ou deux séries de perçages dans les profilés. En outre, un profilé de ce type s'oppose de façon accrue à la fermeture de l'ouvrant, puisqu'il est nécessaire de comprimer les deux profilés tubulaires et que les épaisseurs de ces deux profilés additionnent leur résistance à la compression.

On a également proposé d'utiliser un unique profilé tubulaire, à l'intérieur duquel s'étend transversalement une cloison, par exemple entre la branche ou la base du profilé à section en U formant pince à laquelle le profilé tubulaire est attenant et une partie opposée de ce profilé tubulaire. Un tel joint présente de meilleures qualités d'insonorisation, mais la cloison qu'il comporte le rigidifie. En outre, il est nécessaire de ménager un ou des orifices dans cette cloison pour faire communiquer les deux compartiments qu'elle sépare, en plus de ceux pratiqués dans le profilé tubulaire, ce qui complique les opérations de fabrication.

Il a enfin été envisagé de gainer extérieurement et/ou intérieurement le profilé tubulaire d'une couche continue en un matériau souple différent, ce qui améliore très sensiblement les propriétés insonorisantes de ce profilé, mais contrarie de façon notable son aptitude à se déformer élastiquement, pour épouser fidèlement le profil de l'encadrement de l'ouverture de carrosserie dont est solidaire le profilé formant pince qui lui est associé, en particulier dans les angles à forte courbure de cet encadrement, et pour se déformer lors de la fermeture de la porte.

La présente invention s'intéresse aux joints d'étanchéité comportant soit une lèvre d'étanchéité, soit un profilé tubulaire de ce dernier type, et elle vise à associer à leurs bonnes caractéristiques d'insonorisation une meilleure aptitude à la déformation, en vue d'épouser plus facilement le profil de l'encadrement de l'ouverture de la carrosserie d'automobile auquel ces joints sont associés.

On connaît, par EP 613 800 A, un joint d'étanchéité pour encadrement de porte d'automobile, dont une partie à section en U coiffe un bord saillant de l'encadrement, tandis que l'organe d'étanchéité proprement dit est constitué d'un élément tubulaire déformable élastiquement sous la sollicitation de la porte, qui est attenant à la partie à section en U et qui comporte un écran acoustique ayant une impédance acoustique supérieure à celle du matériau de l'organe d'étanchéité. Cet écran acoustique est rapporté à l'extérieur ou à l'intérieur de l'élément tubulaire ou sur une face d'une cloison interne de celui-ci. Il est cependant indiqué qu' « en raison du type de matériau dont il est constitué, l'écran acoustique 30 tend à décroître la flexibilité de la partie d'étanchéité 14, en tendant ainsi à accroître l'effort requis pour fermer la porte » (col.4, 1.1-5) et, pour remédier à cet inconvénient, « l'écran acoustique 30 est avantageusement formé avec des entailles longitudinales 32, qui facilitent la déformation de l'écran acoustique quand la partie d'étanchéité 14 est déformée par la porte qui se ferme (...), en compensant ainsi la flexibilité diminuée du matériau de l'écran acoustique » (col.4, 1.12-17).

Lorsque l'on examine les diverses formes de mise en oeuvre du joint faisant l'objet de EP 613 800 A, on constate en outre qu'en position de fermeture de la porte (voir figures 5 et 7 de ce document antérieur), l'écran acoustique ne s'étend que sur une partie du trajet des ondes sonores et que son efficacité est donc limitée.

La présente invention vise à éviter ces inconvénients, en proposant un joint d'étanchéité dans lequel sont prévues sur l'organe d'étanchéité une pluralité de pellicules minces, à surface unie, en un matériau différent de celui de cet organe ou en le même matériau mais ayant des propriétés physiques différentes, ces pellicules étant disposées de façon telle, sur le trajet des ondes sonores, que ces dernières rencontrent nécessairement l'une de ces pellicules.

A cet effet, l'invention a pour objet un joint d'étanchéité à effet insonorisant et à aptitude à la déformation améliorée, destiné à équiper un ouvrant d'un véhicule automobile ou un encadrement d'une ouverture de la carrosserie associée à cet ouvrant, ce joint comprenant au moins un organe d'étanchéité tel qu'une lèvre ou un profilé tubulaire en un matériau déformable élastiquement, apte à être rendu solidaire de l'ouvrant ou de l'encadrement en faisant saillie, respectivement, en direction de l'encadrement ou de l'ouvrant, en vue d'être comprimé entre eux en position de fermeture de l'ouvrant, ce joint étant caractérisé en ce que la surface externe et/ou interne de l'organe d'étanchéité est gainée localement d'une pluralité de pellicules minces, à surface externe continue, en un matériau différent ou présentant des propriétés physiques différentes, destinées à former une barrière additionnelle au passage des ondes sonores, ces pellicules ne s'étendant sur la surface correspondante de l'organe d'étanchéité que suivant une partie de sa section transversale et éventuellement que suivant une partie de sa longueur, de manière à ne perturber que localement et de façon minime l'aptitude à la déformation de cet organe, et étant disposées de façon telle, sur l'organe d'étanchéité, qu'en position de fermeture de l'ouvrant, les ondes sonores traversant cet organe rencontrent nécessairement sur leur trajet au moins une de ces pellicules.

Les minces pellicules insonorisantes dont est revêtu localement l'organe d'étanchéité ne s'étendent donc que sur une partie de la section transversale et éventuellement de la longueur de celui-ci, et les parties de la surface sur laquelle elles sont présentes sont donc choisies en fonction du profil de l'encadrement ou de l'ouvrant que le joint équipe, de manière à ne pas contrarier sensiblement l'aptitude de l'organe d'étanchéité à se déformer élastiquement pour épouser fidèlement ce profil et de façon telle que les ondes sonores rencontrent toujours au moins une telle pellicule sur leur trajet. Chaque pellicule participe ainsi à l'amélioration des performances acoustiques du joint, en formant une barrière au passage des ondes sonores, et leur nombre accroît naturellement l'insonorisation de l'habitacle du véhicule.

Lorsque l'organe d'étanchéité est un profilé tubulaire, sa paroi peut être pourvue d'au moins un orifice, permettant la libre circulation de l'air vers l'intérieur ou l'extérieur du joint.

Dans le cas où des organes additionnels sont prévus à l'intérieur du profilé tubulaire, soit pour le renforcer, soit pour améliorer ses propriétés insonorisantes, une partie au moins de la surface externe de ces organes peut elle aussi être revêtue localement de pellicules en un matériau différent ou présentant des propriétés physiques différentes.

Comme indiqué ci-dessus, l'organe d'étanchéité peut être avantageusement attenant à la base ou à une branche latérale du profilé à section en U formant pince, apte à coiffer un bord saillant de l'ouvrant ou de l'encadrement de l'ouverture associée à cet ouvrant et il peut être venu de fabrication par coextrusion avec ce profilé formant pince.

Ce sont de telles formes de réalisation de l'invention qui vont être décrites ci-après de façon plus détaillée, à titre d'exemple, en référence aux dessins schématiques annexés.

Sur ces dessins :
Les figures 1, 2, 3 et 4 sont des coupes transversales de quatre formes de réalisation d'un joint conforme à l'invention, dans lequel le joint d'étanchéité est un profilé tubulaire ;
La figure 5 est une coupe transversale d'un autre joint d'étanchéité, dans lequel l'organe d'étanchéité est une lèvre.

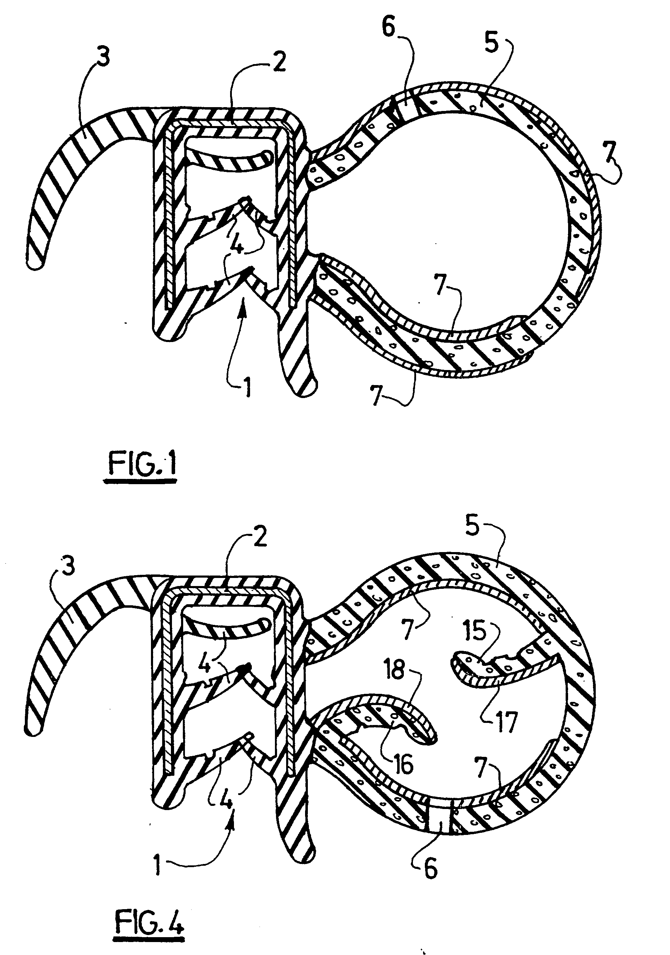

Le joint représenté sur la figure 1 comprend un profilé à section en U, 1, en élastomère ou en plastomère, équipé d'une armature métallique 2, également à section en U, et destiné ici à coiffer un bord saillant d'un encadrement de porte d'automobile. Une lèvre cosmétique 3 fait saillie latéralement à partir de la base du U, tandis que des lèvres 4 en un matériau souple tel qu'un élastomère font saillie à l'intérieur du U à partir des branches de celui-ci, en vue d'enserrer fermement le bord saillant de l'encadrement de porte.

Un profilé tubulaire 5, par exemple en caoutchouc cellulaire, est attenant à une des branches du profilé 1 et fait saillie latéralement vers l'extérieur du véhicule, du côté opposé à la lèvre 3. Ce profilé 5 est destiné à être comprimé entre l'encadrement de porte et cette porte, en position de fermeture de celle-ci, en vue d'assurer l'étanchéité de l'habitacle et de l'insonoriser, et il est généralement percé d'orifices 6, disposés à intervalles réguliers ou non le long du profilé, pour permettre le passage de l'air vers l'extérieur du profilé ou vers l'intérieur de celui-ci.

Ce joint peut être réalisé par une unique opération de coextrusion des profilés 1 et 5.

Conformément à l'invention, le profilé tubulaire 5 est revêtu localement, ici sur sa surface externe et sur sa surface interne, de minces pellicules 7 en un matériau souple différent de celui du profilé 5 ou en un matériau analogue, mais présentant des caractéristiques physiques différentes, comme la masse spécifique par exemple. Ces pellicules 7, destinées à former des barrières au passage des ondes sonores, ne s'étendent que suivant une partie de la section transversale et de la longueur du profilé 5, de manière à ne perturber que localement et de façon minime l'aptitude à la déformation de celui-ci, et sont disposées de façon telle qu'en position de fermeture de la porte, les ondes sonores rencontrent nécessairement au moins une de ces pellicules.

Dans chaque cas d'espèce, la position des pellicules 7 sera choisie de façon à permettre au profilé 5 d'épouser au mieux la forme de l'encadrement de porte, tout en renforçant son effet insonorisant.

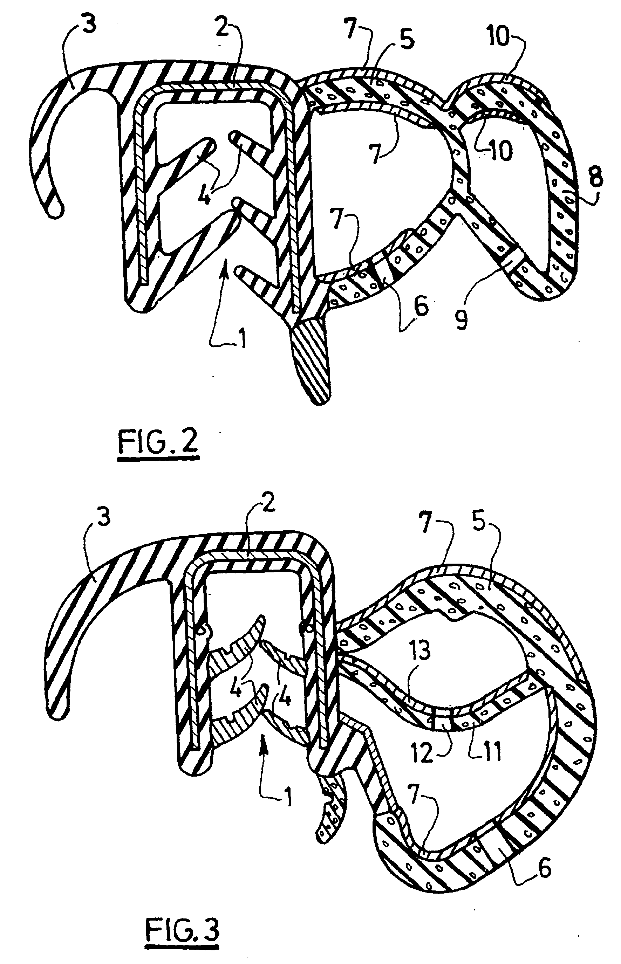

Dans la forme de réalisation de la figure 2, où les organes déjà décrits sont désignés par les mêmes chiffres de référence, un second profilé tubulaire 8, ici en le même matériau que celui du profilé 5 et communiquant avec l'extérieur par des orifices 9, est attenant au profilé 5.

Conformément à l'invention, la surface externe et la surface interne du profilé 8 sont gainées localement par de minces pellicules 10 en un matériau différent de celui du profilé 8 ou analogue à celui-ci, mais ayant des caractéristiques physiques différentes, qui ne s'étendent que suivant une partie de la section transversale et de la longueur de ce profilé 8, mais qui sont disposées de façon telle qu'en position de fermeture de la porte, les ondes sonores rencontrent nécessairement sur leur trajet l'une de ces pellicules.

Dans la forme de réalisation de la figure 3, où les organes déjà décrits sont aussi désignés par les mêmes chiffres de référence, le profilé tubulaire 5, est du même type général que celui de la figure 1, mais il est divisé intérieurement en deux compartiments par une cloison 11, percée d'orifices 12, qui s'étend transversalement depuis une branche latérale du profilé 1 à section en U jusqu'à la partie opposée du profilé tubulaire 5.

Cette cloison 11 est gainée sur au moins une partie de l'une de ses faces d'une mince pellicule 13, en un matériau différent ou en un matériau analogue, mais ayant des propriétés physiques différentes, qui accroît l'effet insonorisant des pellicules 7 disposées sur l'organe d'étanchéité 5.

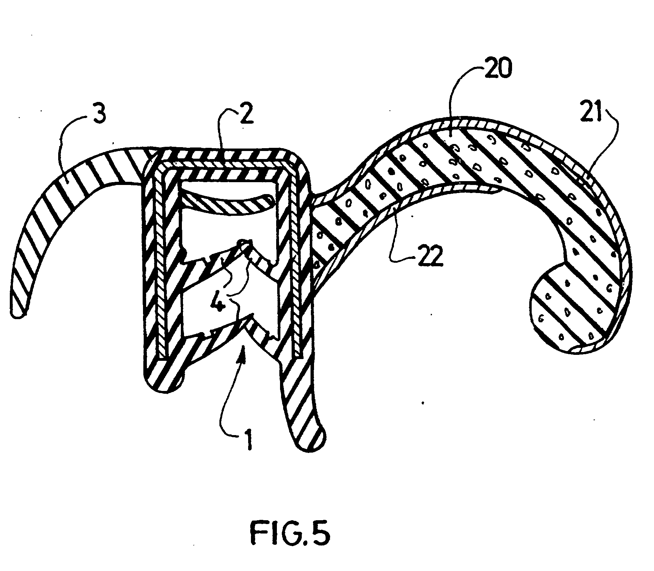

La figure 4, sur laquelle les organes déjà décrits sont à nouveau désignés par les mêmes chiffres de référence, représente une autre forme de réalisation, dans laquelle le joint conforme à l'invention est du type décrit dans la demande de brevet français N° 99.05645, du 4 Mai 1999, non publiée à la date de dépôt de la présente demande.

Dans cette forme de réalisation, deux lèvres 15 et 16, attenantes au profilé tubulaire 5, font saillie en direction l'une de l'autre à l'intérieur de ce profilé, de manière à venir en contact mutuel lorsque ce profilé est comprimé en position de fermeture de l'ouvrant, pour former une barrière sensiblement continue sur le passage des ondes sonores.

Conformément à l'invention, une pellicule mince, respectivement 17, 18, en un matériau différent de celui des lèvres 15 et 16 ou en un matériau analogue ayant des propriétés physiques différentes, recouvre au moins une partie d'une face de chacune de ces lèvres, pour accroître encore leur effet insonorisant, et les pellicules sont disposées de façon telle, sur le trajet des ondes sonores, que celles-ci rencontrent nécessairement sur leur trajet, en position de fermeture de la porte, l'une de ces pellicules ou l'une des pellicules 7 disposées sur le profilé tubulaire 5.

La figure 5, sur laquelle les organes déjà décrits sont également désignés par les mêmes chiffres de référence, est une coupe transversale d'un joint conforme à l'invention, dans lequel l'organe d'étanchéité est constitué par une lèvre 20, ici en un caoutchouc cellulaire, gainée ici sur toute sa surface externe d'une mince pellicule 21 d'un élastomère, mais revêtue sur sa surface interne d'une pellicule 22, en le même ou en un autre élastomère, qui ne s'étend que suivant une partie de la section transversale de cette lèvre et éventuellement de sa longueur. Cette lèvre peut ainsi se déformer aisément pour épouser la forme de l'ouvrant ou de l'encadrement d'ouverture de porte équipé de ce joint.

Dans toutes ces réalisations, on notera la grande simplicité des joints insonorisants conformes à l'invention et leur facilité de fabrication.

## Revendications

1. Joint d'étanchéité à effet insonorisant et à aptitude à la déformation améliorée, destiné à équiper un ouvrant d'un véhicule automobile ou un encadrement d'une ouverture de la carrosserie associée à cet ouvrant, ce joint comprenant au moins un organe d'étanchéité tel qu'une lèvre (20) ou un profilé tubulaire (5) en un matériau déformable élastiquement, apte à être rendu solidaire de l'ouvrant ou de l'encadrement en faisant saillie, respectivement, en direction de l'encadrement ou de l'ouvrant, en vue d'être comprimé entre eux en position de fermeture de l'ouvrant, ce joint étant **caractérisé en ce que** la surface externe et/ou interne de l'organe d'étanchéité (5, 20) est gainée localement d'une pluralité de minces pellicules à surface externe continue (7, 22) en un matériau différent ou présentant des propriétés physiques différentes, destinées à former une barrière additionnelle au passage des ondes sonores, ces pellicules (7, 22) ne s'étendant sur la surface correspondante de l'organe d'étanchéité que suivant une partie de sa section transversale et éventuellement que suivant une partie de sa longueur, de manière à ne perturber que localement et de façon minime l'aptitude à la déformation de ce profilé, et étant disposées de façon telle, sur l'organe d'étanchéité, qu'en position de fermeture de l'ouvrant, des ondes sonores traversant cet organe rencontrent nécessairement sur leur trajet au moins une de ces pellicules.

2. Joint selon la revendication 1, dans lequel l'organe d'étanchéité est un profilé tubulaire (5) et où des organes additionnels (11 ; 15, 16) attenants au profilé tubulaire (5) sont logés à l'intérieur de celui-ci, **caractérisé en ce qu'**une partie au moins d'une surface de ces organes est revêtue d'au moins une pellicule mince à surface externe continue (13 ; 17, 18) en un matériau différent de celui du profilé tubulaire ou présentant des propriétés physiques différentes.

3. Joint selon la revendication 2, **caractérisé en ce que** lesdits organes comprennent une cloison interne (11) divisant le profilé tubulaire (5) en deux compartiments.

4. Joint selon la revendication 2, **caractérisé en ce que** lesdits organes comprennent au moins deux lèvres (15, 16) faisant saillie en direction l'une de l'autre à l'intérieur du profilé tubulaire (5) et aptes à venir en contact mutuel lorsque le profilé tubulaire est comprimé par l'ouvrant en position de fermeture de celui-ci.

5. Joint selon la revendication 1, dans lequel l'organe d'étanchéité est un profilé tubulaire (5), **caractérisé en ce qu'**il comprend un second profilé tubulaire (8) attenant au premier profilé (5), ce second profilé étant revêtu localement, sur sa surface externe et/ou interne, d'une pluralité de pellicules à surface externe continue (10), en un matériau différent de celui du profilé (8) ou ayant des propriétés physiques différentes, ces pellicules (10) ne s'étendant que suivant une partie de la section transversale et éventuellement une partie de la longueur de ce second profilé tubulaire (8) et étant disposées de façon telle, sur le second profilé, qu'en position de fermeture de l'ouvrant, les ondes sonores traversant ce second profilé rencontrent nécessairement sur leur trajet au moins une de ces pellicules.

6. Joint selon la revendication 1, dans lequel l'organe d'étanchéité est une lèvre (20), **caractérisé en ce que** cette lèvre (20) est recouverte sur sa surface externe et sur sa surface interne d'une mince pellicule à surface externe continue (21,22) en un matériau différent ou en le même matériau, mais présentant des propriétés physiques différentes, qui ne s'étendent que suivant une partie de la section transversale et éventuellement que suivant une partie de la longueur de cette lèvre (20), mais qui sont disposées de façon telle sur la lèvre qu'en position de fermeture de l'ouvrant, les ondes sonores traversant cette lèvre rencontrent nécessairement l'une de ces pellicules (21, 22).

7. Joint selon l'une des revendications 1 à 6, **caractérisé en ce que** le profilé tubulaire (5) ou la lèvre (20) est attenant à un profilé (1) formant pince à section en U, apte à coiffer un bord saillant de l'ouvrant de véhicule automobile ou de l'encadrement de l'ouverture de la carrosserie associée à cet ouvrant, et est venu de fabrication par coextrusion avec ce profilé (1) formant pince.

## Claims

1. Sound damping sealing strip with improved deformation ability designed for equipping an opening of an automotive vehicle or a frame of an opening in the bodywork associated with this opening, this strip comprising at least one sealing member such as a lip (20) or a tubular profiled section (5) made from an elastically deformable material, capable of being secured to the opening or to the frame, projecting, respectively, towards the frame or the opening, with a view to its being compressed between these when the opening is closed, this strip being **characterized in that** the outer and/or inner surface of the sealing member (5, 20) is locally sheathed by a plurality of thin films with a continuous outer surface (7, 22) made from a different material or having different physical properties, designed to form an additional barrier to the passage of sound waves, these films (7, 22) extending over the corresponding surface of the sealing member only in a part of its transverse section and optionally over a part of its length so as only locally and minimally to disrupt this profiled section's deformation ability, and being arranged such that, on the sealing member, when the opening is closed, sound waves passing through this member necessarily encounter at least one of these films in their path.

2. Strip according to Claim 1, in which the sealing member is a tubular profiled section (5) and in which additional members (11; 15, 16) contiguous with the tubular profiled member (5) are housed inside it, **characterized in that** a part at least of a surface of these members is covered with at least one thin film with continuous outer surface (13; 17, 18) made from a material different from that of the tubular profiled section or having different physical properties.

3. Strip according to Claim 2, **characterized in that** said members comprise an inner partition (11) dividing the tubular profiled section (5) into two compartments.

4. Strip according to Claim 2, **characterized in that** said members comprise at least two lips (15, 16) projecting towards one another inside the tubular profiled section (5) and capable of coming into mutual contact when the tubular profiled section is compressed by the opening when closed.

5. Strip according to Claim 1, in which the sealing member is a tubular profiled section (5), **characterized in that** it comprises a second tubular profiled section (8) contiguous with the first profiled section (5), this second profiled section being locally covered, on its outer and/or inner surface, with a plurality of films with continuous outer surface (10) made from a material different from that of the profiled section (8) or having different physical properties, these films (10) extending only over a part of the transverse section and optionally over a part of the length of this second tubular profiled section (8) and being arranged such that, on the second profiled section, when the opening is closed, the sound waves passing through this second profiled section necessarily encounter at least one of these films in their path.

6. Strip according to Claim 1, in which the sealing member is a lip (20), **characterized in that** this lip (20) is covered on its outer surface and on its inner surface with a thin film with continuous outer surface (21, 22) made from a different material or from the same material, but having different physical properties, extending only over a part of the transverse section and optionally only over a part of the length of this lip (20), but arranged such that, on the lip, when the opening is closed, the sound waves passing through this lip necessarily encounter one of these films (21, 22).

7. Strip according to one of Claims 1 to 6, **characterized in that** the tubular profiled section (5) or the lip (20) is contiguous with a profiled section (1) forming a U-shaped cross-sectioned clamp capable of capping a projecting edge of the opening of the automotive vehicle or of the frame of the opening in the bodywork associated with this opening, and is made as a single piece by means of coextrusion together with this profiled section (1) forming the clamp.

## Patentansprüche

1. Dichtung mit einer schalldämmenden Wirkung und mit einer verbesserten Verformbarkeit, die für die Ausstattung eines Türflügels eines Kraftfahrzeugs oder einer Umrandung einer diesem Türflügel zugeordneten Karosserieöffnung bestimmt ist, wobei diese Dichtung zumindest ein Dichtungsorgan wie eine Lippe (20) oder ein rohrförmiges Profil (5) aus einem elastisch verformbaren Material aufweist, das mit dem Türflügel oder mit der Umrandung, von dem/der es jeweils in Richtung der Umrandung oder des Türflügels vorspringt, im Hinblick darauf, in der Schließposition des Türflügels zwischen diesen zusammengedrückt zu werden, fest verbunden werden kann, wobei diese Dichtung **dadurch gekennzeichnet ist, dass** die Außenfläche und/oder die Innenfläche des Dichtungsorgans (5, 20) lokal mit einer Mehrzahl von dünnen Häuten (7, 22) mit durchgehender Außenfläche aus einem unterschiedlichen oder unterschiedliche physikalische Eigenschaften aufweisenden Material überzogen ist, die dazu bestimmt sind, eine zusätzliche Barriere gegen durchdringende Schallwellen zu bilden, wobei sich diese Häute (7, 22) auf der entsprechenden Oberfläche des Dichtungsorgans nur entlang eines Teils seines Querschnitts und unter Umständen nur entlang eines Teils seiner Länge erstrecken, derart, dass sie die Verformbarkeit dieses Profils nur lokal und nur in sehr geringem Maße stören, und an dem Dichtungsorgan auf solche Weise angeordnet sind, dass in der Schließposition des Türflügels die dieses Organ durchquerenden Schallwellen auf ihrem Weg notwendigerweise auf zumindest eine dieser Häute treffen.

2. Dichtung nach Anspruch 1, bei welcher das Dichtungsorgan ein rohrförmiges Profil (5) ist und bei der an das rohrförmige Profil (5) angrenzende zusätzliche Organe (11; 15, 16) innen in diesem Profil angeordnet sind, **dadurch gekennzeichnet, dass** zumindest ein Teil einer Oberfläche dieser Organe mit wenigstens einer dünnen Haut (13; 17, 18) mit durchgehender Außenfläche aus einem sich von dem Material des rohrförmigen Profils unterscheidenden oder davon verschiedene physikalische Eigenschaften aufweisenden Material verkleidet sind.

3. Dichtung nach Anspruch 2, **dadurch gekennzeichnet, dass** die genannten Organe eine innere Wand (11) umfassen, die das rohrförmige Profil (5) in zwei Abteilungen unterteilt.

4. Dichtung nach Anspruch 2, **dadurch gekennzeichnet, dass** die genannten Organe zumindest zwei Lippen (15, 16) umfassen, die im Inneren des rohrförmigen Profils (5) in Richtung zueinander vorspringen und die in gegenseitigen Kontakt gelangen können, wenn das rohrförmige Profil durch den sich in der Schließposition befindenden Türflügel komprimiert wird.

5. Dichtung nach Anspruch 1, bei welcher das Dichtungsorgan ein rohrförmiges Profil (5) ist, **dadurch gekennzeichnet, dass** sie ein an das erste Profil (5) angrenzendes zweites rohrförmiges Profil (8) umfasst, welches an seiner Außenfläche und/oder Innenfläche lokal mit einer Mehrzahl von Häuten (10) mit durchgehender Außenfläche aus einem sich von dem Material des Profils (8) unterscheidenden oder von diesem verschiedene physikalische Eigenschaften aufweisenden Material überzogen ist, wobei sich diese Häute (10) nur entlang eines Teils des Querschnitts und unter Umständen eines Teils der Länge dieses zweiten rohrförmigen Profils (8) erstrecken und an dem zweiten Profil derart angeordnet sind, dass die dieses zweite Profil durchquerenden Schallwellen in der Schließposition des Türflügels auf ihrem Weg notwendigerweise auf zumindest eine dieser Häute treffen.

6. Dichtung nach Anspruch 1, bei welcher das Dichtungsorgan eine Lippe (20) ist, **dadurch gekennzeichnet, dass** diese Lippe (20) an ihrer Außenfläche und an ihrer Innenfläche mit einer dünnen Haut (21, 22) mit durchgehender Außenfläche aus einem unterschiedlichen Material oder aus dem gleichen, jedoch andere physikalische Eigenschaften aufweisenden Material überzogen ist, wobei die Häute sich nur entlang eines Teils des Querschnitts und eventuell nur entlang eines Teils der Länge dieser Lippe (20) erstrecken, jedoch an der Lippe in solcher Weise angeordnet sind, dass die diese Lippe durchquerenden Schallwellen in der Schließposition des Türflügels notwendigerweise auf eine dieser Häute (21, 22) treffen.

7. Dichtung nach einem der Ansprüche 1 bis 6, **dadurch gekennzeichnet, dass** das rohrförmige Profil (5) oder die Lippe (20) an ein Profil (1) angrenzt, welches ein U-förmiges Klemmprofil bildet, das geeignet ist, einen vorspringenden Rand des Türflügels des Kraftfahrzeugs oder der Umrandung der diesem Türflügel zugeordneten Karosserieöffnung zu bedecken und das durch Koextrusion mit diesem Klemmprofil (1) hergestellt ist.
